(19) Europäisches Patentamt
European Patent Office
Office européen des brevets

(11) **EP 4 640 522 B1**

(12) **EUROPÄISCHE PATENTSCHRIFT**

(45) Veröffentlichungstag und Bekanntmachung des Hinweises auf die Patenterteilung:
**08.04.2026  Patentblatt 2026/15**

(21) Anmeldenummer: **25169930.2**

(22) Anmeldetag: **11.04.2025**

(51) Internationale Patentklassifikation (IPC):
***B62D 6/00*** *(2006.01)*

(52) Gemeinsame Patentklassifikation (CPC):
**B62D 6/002**

(54) **RADLENKAKTUATOR-REGLEREINHEIT, VERFAHREN ZUM BETREIBEN EINES STEER-BY-WIRE-LENKSYSTEMS IN EINEM KRAFTFAHRZEUG, STEER-BY-WIRE-LENKSYSTEM UND KRAFTFAHRZEUG**

WHEEL STEERING ACTUATOR CONTROL UNIT, METHOD FOR OPERATING A STEER-BY-WIRE STEERING SYSTEM IN A MOTOR VEHICLE, STEER-BY-WIRE STEERING SYSTEM, AND MOTOR VEHICLE

UNITÉ DE COMMANDE D'ACTIONNEUR DE DIRECTION DE ROUE, PROCÉDÉ DE FONCTIONNEMENT D'UN SYSTÈME DE DIRECTION À COMMANDE ÉLECTRIQUE DANS UN VÉHICULE AUTOMOBILE, SYSTÈME DE DIRECTION À COMMANDE ÉLECTRIQUE ET VÉHICULE AUTOMOBILE

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität: **26.04.2024  BE 202405245**

(43) Veröffentlichungstag der Anmeldung:
**29.10.2025  Patentblatt 2025/44**

(73) Patentinhaber:
- **thyssenkrupp Presta AG**
  **9492 Eschen (LI)**
- **thyssenkrupp AG**
  **45143 Essen (DE)**

(72) Erfinder:
- **Téczely, Zoltán**
  **1119 Budapest (HU)**
- **Szepessy, Imre**
  **9493 Mauren (LI)**
- **Rohrmoser, Manuel**
  **6712 Thüringen (AT)**
- **Mitterrutzner, Andreas**
  **9470 Buchs (CH)**

(74) Vertreter: **thyssenkrupp Intellectual Property GmbH**
**ThyssenKrupp Allee 1**
**45143 Essen (DE)**

(56) Entgegenhaltungen:
**US-B2- 11 167 789**

**Beschreibung**

Steer-by-Wire-Systeme werden bei Kraftfahrzeugen aufgrund verschiedener automatisierter Fahranwendungen immer beliebter. Generell umfassen Steer-by-Wire-Systeme einen Radaktor bzw. Radlenkaktuator (nachfolgend auch kurz: RWA), der für die Steuerung bzw. Regelung eines gelenkten Rads zuständig ist. Die Regelung des RWA kann auf Grundlage eines Referenzsignals erfolgen, wobei ein Feedback-Aktor (nachfolgend auch kurz: FBA) vorhanden ist, der für die Bereitstellung einer Lenkunterstützung und für die Erzeugung des Referenzsignals für den RWA auf der Grundlage des Lenkradwinkels verantwortlich ist.

Entsprechende Regler bzw. Positionsregler sind auch in elektronischen Servolenkungssystemen oder elektrischen Lenkungssystemen (EPAS, engl.: Electric Power Assisted Steering) als Teil verschiedener und selektiver Assistenzfunktionen bekannt, betreffend beispielsweise Einparken und Autobahnfahrt. Bei Steer-by-Wire-Systemen sind die allgemeinen Anforderungen an die Referenzverfolgung jedoch strenger, da das Referenzsignal direkt von der Fahrerseite stammen kann, wie z.B. durch Lenkeinschlag, und alle möglichen dabei auftretenden Szenarien abgedeckt werden müssen, angefangen von Einparken und ruhiger, langsamer Fahrt, über Autobahnfahrt, bis hin zu Ausweichmanövern, Kurvenfahrt mit hoher Belastung, Driften usw. Das bedeutet, dass bei Steer-by-Wire-Systemen entsprechende Aktuatorsteuerungen für das gelenkte Straßenrad einen deutlich größeren Arbeitsbereich erfordern.

Zum Betrieb des RWA werden bekanntermaßen Rückkopplungsregelkreise verwendet, um sicherzustellen, dass der Lenkeinschlag und das Lenkverhalten des Fahrers zuverlässig in einen Lenkwinkel des oder der gelenkten Räder umgesetzt werden.

Aus der US 11,167,789 B2 und der US 11,485,406 B2 sind Regler für RWA bekannt, die eine Regelung der Position einer Zahnstange umfassen, deren Stellung proportional zum Lenkwinkel der Räder ist. Die Regelung der Position erfolgt auf Grundlage von am Lenkrad gemessener oder bestimmter Eingangsbefehle und basieren auf einem Modell, d.h. einem mathematischen Modell, des Lenksystems. Die US 11,167,789 B2 zeigt den Oberbegriff der unabhängigen Ansprüche.

Aus der US 2020/283058 A1 ist ein Regler bekannt, der einen Rückkopplungsregelkreis mit Vorwärtssteuerung umfasst, wobei bei diesem Regler ein Modell zu Grunde liegt, mit dem auch der Straßenzustand, d.h. externe Komponenten und Einflüsse, bei der Vorwärtssteuerung berücksichtigt werden.

Allerdings sind die bekannten Regler für RWA durchaus noch verbesserungsbedürftig, insbesondere hinsichtlich Dynamik, Genauigkeit und des durch den Regler abgedeckten Arbeitsbereichs. Bei RWA von Steer-by-Wire-Systemen ist zu beobachten, dass aufgrund der Systemdimensionierung und verschiedener anderer Systemeigenschaften wie Resonanzfrequenzen Leistungsbeschränkungen auftreten können. Obwohl die bekannten Steuergeräte bzw. Regler i.d.R. auf eine sehr hohe Leistung abgestimmt werden können, hat sich ein Bedarf an noch höheren Leistungsniveaus entwickelt, um die Vorteile von Steer-by-Wire-Systemen ausnutzen zu können.

Ausgehend davon ist es eine Aufgabe der Erfindung, einen verbesserten Regler und verbesserte Verfahren zur Regelung eines RWA bereitzustellen. Insbesondere sollen eine Radlenkaktuator-Reglereinheit, ein Verfahren zum Betreiben eines Steer-by-Wire-Lenksystems in einem Kraftfahrzeug, ein Steer-by-Wire-Lenksystem und ein Kraftfahrzeug mit einem Steer-by-Wire-Lenksystem bereitgestellt werden, die hinsichtlich der Regelung des RWA verbesserte Eigenschaften aufweisen.

Diese Aufgabe wird gelöst durch die Merkmale der jeweils unabhängigen Ansprüche. Ausgestaltungen ergeben sich aus den jeweiligen abhängigen Ansprüchen und der nachfolgenden Beschreibung.

Nach den der Erfindung zu Grunde liegenden Erkenntnissen und basierend auf allgemeinen Anforderungen ist das Verhalten des Teilsystems "Radantrieb" bzw. eines Radlenkaktuators (RWA) eines Steer-by-Wire-Lenksystems eines Kraftfahrzeugs aus Sicht der Fahrzeugbewegung ein relevanter Aspekt der Fahrsicherheit. Die Eigenschaften der Verstärkungsstabilität (Stichwort Gain) und der Phasenverzögerung (Stichwort Phase delay) des Systems hängen vom verwendeten Regelungsschema ab, unterliegen aber im Allgemeinen jedoch Beschränkungen. So ist es beispielsweise bei bekannten Reglern möglich, dass bei einem gegebenen Systemaufbau der Regler für den RWA ab einem bestimmten Betriebspunkt nicht mehr so eingestellt werden kann, dass er eine stabile (nahezu einheitliche) Verstärkung (Gain) und gleichzeitig eine geringe Phasenverzögerung (Phase delay) erreicht. Um jedoch die gewünschten Bewegungseigenschaften des Fahrzeugs zu erreichen, wie z. B. Gierratenverstärkung über den Lenkradwinkel, sind sowohl eine sehr stabile Verstärkung als auch eine sehr geringe Phasenverzögerung von z.B. mindestens 3 bis 5 Hz erforderlich. Solche vorteilhaften Eigenschaften lassen sich mit der zu Grunde liegenden Erfindung erreichen.

Gemäß der zu Grunde liegenden Erfindung wird der Regelkreis des Radlenkaktuators um eine Vorwärtssteuerung erweitert, um eine stabile Verstärkung und bessere Phaseneigenschaften zu erreichen. Diese Vorwärtssteuerung ist vorteilhaft mit einem geeigneten Filter erweitert, um Null-Pol-Divergenzen einer zugehörigen Übertragungsfunktion zu eliminieren.

Insbesondere ist gemäß einer Ausgestaltung eine Radlenkaktuator-Reglereinheit, bzw. eine Reglereinheit für einen Radlenkaktuator, zur Regelung eines Radlenkaktuatorsystems eines Steer-by-Wire-Lenksystems eines Kraftfahrzeugs vorgesehen. Die Radlenkaktuator-Reglereinheit umfasst einen Rückkopplungsregelkreis (engl. feedback control loop), welcher das Radlenkaktuatorsystem durch ein mathematisches Modell abbildet und durch eine zugeordnete erste Übertragungsfunktion beschrieben ist. Die Radlenkaktuator-Reglereinheit umfasst ferner eine Vorwärtssteuerung (engl. feedforward, loop shaping feedforward) für den Rückkopplungsregelkreis. Die Vorwärtssteuerung ist durch eine zweite Übertragungsfunktion beschrieben, bzw. basiert auf einer zweiten Übertragungsfunktion. Erfindungsgemäß basiert die zweite Übertragungsfunktion auf einer durch Invertieren der ersten Übertragungsfunktion gebildeten Reziprokübertragungsfunktion, bzw. einer Inversen der ersten Übertragungsfunktion.

Mit einer solchen Reglereinheit mit der genannten Vorwärtssteuerung kann erreicht werden, dass die Reaktion des Systems genauer (stabile Verstärkung, bzw. stabiler Gain) und gleichzeitig schneller (geringere Phasenverzögerung (phase delay)) ist. Gemäß erfindungsgemäßen Erkenntnissen ist damit insbesondere möglich, die Resonanzfrequenz und den Dämpfungsgrad des Systems zu kompensieren, denn der Regler "kennt" diese Größen auf Grund der vorgeschlagenen zweiten Übertragungsfunktion als Inverse der ersten Übertragungsfunktion bereits.

Nach einer Ausgestaltung handelt es sich bei dem mathematischen Modell um ein Modell zweiter oder höherer Ordnung. Solche Modelle sind insbesondere für die vorgeschlagene Regelung mit Vorwärtssteuerung basierend auf der Reziprokübertragungsfunktion geeignet.

Nach einer Ausgestaltung entspricht die zweite Übertragungsfunktion einer durch einen Filter erweiterten Reziprokübertragungsfunktion der ersten Übertragungsfunktion. Das bedeutet, dass bei gegebener erster Übertragungsfunktion (z.B. T1) die zweite Übertragungsfunktion (z.B. T2) der um einen Filter (z.B. F) erweiterten Reziprokübertragungsfunktion bzw. Inversen Übertragungsfunktion der ersten Übertragungsfunktion entspricht (z.B. $T2 = F \times T1^{-1}$). Der Filter ist dazu eingerichtet, Null-Pol-Divergenzen in der Inversen zu korrigieren. Mit der vorgeschlagenen zweiten Übertragungsfunktion ist eine stabile Regelung des RWA möglich.

Gemäß einer Ausgestaltung kann es sich bei dem Filter um einen Tiefpassfilter handeln.

Gemäß Ausgestaltungen ist ein Verfahren zum Betreiben eines Steer-by-Wire-Lenksystems in einem Kraftfahrzeug vorgesehen, wobei das Steer-by-Wire-Lenksystem ein Radlenkaktuatorsystem aufweist. Bei dem Verfahren wird das Radlenkaktuatorsystem durch einen Rückkopplungsregelkreis, dem eine Vorwärtssteuerung vorgeschaltet ist, gesteuert und/oder geregelt. Dabei ist der Rückkopplungsregelkreis das Radlenkaktuatorsystem durch ein mathematisches Modell abgebildet und durch eine zugeordnete erste Übertragungsfunktion beschrieben. Die Vorwärtssteuerung wird bzw. ist durch eine zweite Übertragungsfunktion beschrieben. Verfahrensgemäß ist vorgesehen, dass die zweite Übertragungsfunktion gebildet ist bzw. wird aus einer durch Invertieren der ersten Übertragungsfunktion gebildeten Reziprokübertragungsfunktion.

Nach einer verfahrensgemäßen Ausgestaltung wird für das mathematische Modell ein Modell zweiter oder höherer Ordnung verwendet.

Nach einer verfahrensgemäßen Ausgestaltung wird die zweite Übertragungsfunktion gebildet durch eine um einen Filter erweiterte Reziprokübertragungsfunktion der ersten Übertragungsfunktion, insbesondere durch eine um einen Filter erweiterte Inverse der ersten Übertragungsfunktion. Die Verwendung der erweiterten Reziprokübertragungsfunktion ermöglicht insbesondere eine hohe Systemstabilität, mit stabiler Verstärkung (Gain) und guten Phaseneigenschaften. Es wird diesbezüglich auf die obigen Ausführungen verwiesen.

Nach einer verfahrensgemäßen Ausgestaltung wird als Filter ein Tiefpassfilter verwendet.

Nach einer verfahrensgemäßen Ausgestaltung werden durch den Filter Null-Pol-Divergenzen der Reziprokübertragungsfunktion eliminiert oder zumindest korrigiert.

Korrespondierend zu den Ausführungen zur Radlenkaktuator-Reglereinheit kann bei dem Verfahren das mathematische Modell ein Modell zweiter oder höherer Ordnung sein und die zweite Übertragungsfunktion kann gebildet sein durch eine um einen Filter erweiterte Reziprokübertragungsfunktion der ersten Übertragungsfunktion, wobei der Filter dazu eingerichtet ist, Null-Pol-Divergenzen der Reziprokübertragungsfunktion zu korrigieren, d.h. Nullen und Pole der Reziprokübertragungsfunktion zu korrigieren, zu beseitigen oder zu eliminieren, zumindest auf dem jeweiligen Betriebsbereich des Radlenkaktuatorsystems. Durch ein Gleichgewicht zwischen der Anzahl der Nullen und Pole kann eine stabile Reglereinheit mit vorteilhafter Systemleistung (Gain, Phase)) sichergestellt werden. Beispielsweise kann als Filter ein Tiefpassfilter verwendet werden.

Unter Nullen der Übertragungsfunktion sind, gemäß des üblichen Verständnisses, beispielsweise Werte, für welche die Übertragungsfunktion null wird, gemeint. Unter einem Pol der Übertragungsfunktion sind, gemäß des üblichen Verständnisses, Werte, für welche die Übertragungsfunktion unendlich wird, gemeint. Nullen und Pole beeinflussen bekanntermaßen die Dynamik, Schwingungsverhalten und mithin die Stabilität des Regelsystems.

Entspricht die Anzahl der Nullen nicht der Anzahl der Pole der Übertragungsfunktion, kann eine solche Divergenz, auch "Missmatch" genannt, zu Instabilität oder schlechter Systemreaktion führen.

Eine stabile Verstärkung (Gain) ist insbesondere bei Steer-by-Wire-Systemen wichtig, um eine genaue Regelung des RWA korrespondierend zu den Lenkbewegungen zu erhalten, insbesondere um unerwünschte Schwingungen oder Instabilitäten zu vermeiden. Auch sind insbesondere bei Steer-by-Wire-Systemen gute Phaseneigenschaften (Phase Characteristics) wichtig, denn die Phaseneigenschaften einer Übertragungsfunktion sind ein entscheidender Faktor für die Reaktionsfähigkeit, d.h. die Dynamik, des Radlenkaktuatorsystems.

Mit dem vorgeschlagenen Verfahren können Verstärkung (Gain) und Phaseneigenschaften (Phase Characteristics) bei einem Rückkopplungsregelkreis einer Reglereinheit zur Regelung eines Radlenkaktuatorsystems eines Steer-by-Wire-Lenksystems eines Kraftfahrzeugs verbessert werden.

Zu Vorteilen und vorteilhaften Wirkungen des Verfahrens wird auf die obigen Ausführungen verwiesen. Insbesondere ist es mit der vorgeschlagenen zweiten Übertragungsfunktion möglich, mit dem Rückkopplungsregelkreis bzw. den zugeordneten Regler Resonanzfrequenz(en) den Dämpfungsgrad des Systems geeignet zu kompensieren. Denn durch Verwendung der Inversen können die genannten Parameter, d.h. Resonanzfrequenz und Dämpfungsgrad, die in dem mathematischen Modell, aus dem die erste Übertragungsfunktion resultiert, abgebildet sind, im Gesamtmodell berücksichtigt werden. Es kann insbesondere erreicht werden, dass die Reaktion des Systems genauer, mit stabiler Verstärkung (Gain), und gleichzeitig schneller, mit geringerer Phasenverzögerung, arbeitet.

Gemäß einer weiteren Ausgestaltung ist ein Steer-by-Wire-Lenksystem für ein Kraftfahrzeug vorgesehen. Das Steer-by-Wire-Lenksystem umfasst ein Radlenkaktuatorsystem und ferner eine Radlenkaktuator-Reglereinheit nach einer der hierin beschriebenen erfindungsgemäßen Ausgestaltungen, oder eine Radlenkaktuator-Reglereinheit, die derart eingerichtet oder programmiert ist, dass diese im Betrieb ein Verfahren gemäß einer hierin beschriebenen, erfindungsgemäßen Ausgestaltung bewirkt. Vorteile und vorteilhafte Wirkungen ergeben sich insbesondere aus den Ausführungen zur Radlenkaktuator-Reglereinheit bzw. zum Verfahren, und es wird insoweit auf die obigen Ausführungen verwiesen.

Gemäß Ausgestaltungen ist ein Kraftfahrzeug vorgesehen, das ein Steer-by-Wire-Lenksystem aufweist, das eine benutzerseitig bedienbare Lenkeinheit und ein mit zumindest einem gelenkten Rad gekoppeltes Radlenkaktuatorsystem mit zumindest einem Radlenkaktuator, und ferner eine Radlenkaktuator-Reglereinheit nach einer der beschriebenen erfindungsgemäßen Ausgestaltungen umfasst. Die Radlenkaktuator-Reglereinheit ist mit dem Radlenkaktuator regelungstechnisch gekoppelt zum Zwecke der Regelung des Radlenkaktuators und Umsetzung einer Lenkstellung des gelenkten Rads basierend auf einem durch die Lenkeinheit erzeugten elektrischen Signal. Vorteile und vorteilhafte Wirkungen folgen aus den Ausführungen zur Radlenkaktuator-Reglereinheit und den obigen Ausführungen.

Gemäß Ausgestaltungen kann ein Regler- und Streckenmodell, d. h. ein Rückkopplungsregelkreis bzw. eine Rückkopplungsschleife des Radaktuators bzw. Radlenkaktuators, als ein System zweiter oder höherer Ordnung mit einer Übertragungsfunktion modelliert werden, wobei Parameter des Modells anhand von Messdaten ermittelt werden. Das Modell kann dann invertiert werden (Reziprokübertragungsfunktion) und mit einem geeigneten Filter erweitert werden (erweiterte Reziprokübertragungsfunktion), um die Null-Pol-Divergenzen auszugleichen. Dieses invertierte und gefilterte Modell, d.h. die erweiterte Reziprokübertragungsfunktion, bildet eine Vorwärtssteuerung, d.h. eine Feedforward-Komponente, für den Rückkopplungsregelkreis.

Insbesondere kann ein Rückkopplungsregelkreis als ein geschlossener Regelkreis dargestellt werden durch ein Modell einer Übertragungsfunktion zweiter Ordnung. Das Modell kann Trägheitsterme, Dämpfungskoeffizienten und andere Störeinflüsse wie Reibung und Last enthalten. Die Feedforward-Komponente kann aus dem invertierten Modell des Regelkreises gebildet sein, das mit einem Filter in Reihe geschaltet ist. Der Filter ist so eingerichtet, dass die Korrektheit (engl. "properness") der gesamten Übertragungsfunktion erhalten bleibt, d. h. der Nenner hat mindestens die Ordnung des Zählers der Übertragungsfunktion.

Ausführungsbeispiele der Erfindung werden nun anhand der anhängenden Figuren näher beschrieben. Es zeigen

FIG. 1     schematisch ein Steer-by-Wire-Lenksystem für ein Kraftfahrzeug;

FIG. 2     schematisch eine Radlenkaktuator-Reglereinheit für ein Steer-by-Wire-Lenksystem;

FIG. 3     schematisch einen beispielhaften Rückkopplungsregelkreis mit Vorwärtssteuerung; und

FIG. 4     beispielhafte Bodediagramme für eine erfindungsgemäße Radlenkaktuator-Reglereinheit.

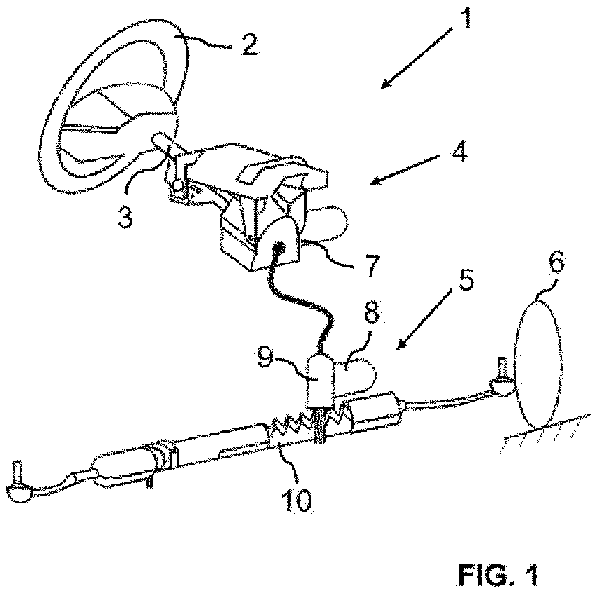

FIG. 1 zeigt schematisch ein Steer-by-Wire-Lenksystem 1 für ein (nicht gezeigtes) Kraftfahrzeug. Das Steer-by-Wire-Lenksystem 1 umfasst als Lenkeinheit ein Lenkrad 2, eine damit verbundene Lenkwelle 3. Das Steer-by-Wire-Lenksystem 1 umfasst ferner eine Radlenkaktuator-Reglereinheit 4 (im Weiteren kurz auch Reglereinheit genannt) zur kabelgebundenen ("steer-by-wire") Steuerung und Regelung eines Radlenkaktuatorsystems 5 zur Steuerung bzw. Regelung des Lenkwinkels eines gelenkten Rads 6 insbesondere in Abhängigkeit eines Lenkradwinkels des Lenkrads 2.

Das Steer-by-Wire-Lenksystem 1 umfasst ferner einen Rückkopplungssteller 7, der z.B. üblicherweise dazu verwendet wird, Kräfte oder Widerstand am Lenkrad 2 zu erzeugen, um dem Fahrer ein haptisches Gefühl für die Straßenbedingungen, Fahrbahnunebenheiten, und/oder Fahrzeugdynamiken zu vermitteln, ähnlich einem Lenksystem, bei dem das Lenkrad mechanisch mit den gelenkten Rädern verbunden sind. Der Rückkopplungssteller 7 kann dazu beitragen, die Fahrzeug- und Lenkstabilität zu verbessern, indem er auf bestimmte Fahrzustände reagieren und beispielsweise Lenkunterstützung oder -korrekturen bereitstellen kann. Ein Rückkopplungssteller wird auch als Feedback-Aktuator bezeichnet.

Der Rückkopplungssteller 7 bildet eine Untereinheit des Regelungssystems bzw. der Reglereinheit 4 für das Steer-by-Wire-Lenksystem 1. Er kann dazu ausgebildet sein, Rückmeldungen von Sensoren, die beispielsweise den Lenkwinkel, einen Drehwinkel, eine Drehgeschwindigkeit und/oder ein Drehmoment eines Radlenkaktuators und andere relevante Parameter messen, zu berücksichtigen, um so eine präzise Steuerung bzw. Regelung der Lenkung zu ermöglichen. Neben den genannten Parametern ist zur Regelung des Lenkverhaltens ferner der Lenkradwinkel bzw. der Lenkeinschlag ein relevanter Systemparameter.

Das Radlenkaktuatorsystem 5 kann, wie gezeigt, beispielsweise einen Elektromotor 8 umfassen, der über ein Getriebe 9 mit einer Zahnstange 10 verbunden ist, wobei die Zahnstange zur Einstellung des jeweiligen Lenkwinkels der gelenkten Räder 6 basierend auf Signalen der Reglereinheit 4 vorgesehen ist. Andere Radlenkaktuatorsysteme, die auf anderen mechanischen Übertragungswegen basieren sind ebenfalls möglich.

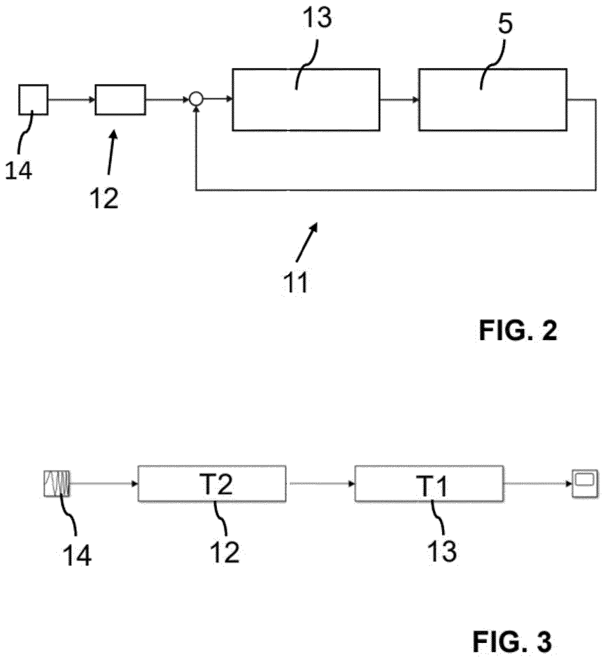

FIG. 2 zeigt schematisch und beispielhaft ein vereinfachtes Modell einer Radlenkaktuator-Reglereinheit 4 für das Steer-by-Wire-Lenksystem 1. Die Reglereinheit 4 umfasst einen Rückkopplungsregelkreis 11 mit einer Vorwärtssteuerung 12, wobei der Rückkopplungsregelkreis 11 im vorliegenden Fall einen Regler 13 bzw. eine Regelung oder Steuerung umfasst, welche mit dem Radlenkaktuatorsystem (RWA) 5 regelungs- oder steuerungstechnisch gekoppelt ist. Eingangsdaten bzw. Referenzwerte für die Vorwärtssteuerung 12 sind mit dem Bezugszeichen 14 bezeichnet, und können beispielsweise Referenzdaten zur Position der Zahnstange 10 umfassen. Hierbei ist anzumerken, dass die Position der Zahnstange oder ein davon abgeleiteter Wert charakteristisch für den jeweiligen Lenkwinkel des gelenkten Rads 6 ist. Der Vorwärtssteuerung 12 und dem Rückkopplungsregelkreis 11 können zusätzliche, durch beispielsweise den Rückkopplungssteller erzeugte Eingangsdaten, als Eingangsdaten bereitgestellt werden.

FIG. 3 zeigt schematisch, und vereinfacht, einen beispielhaften Rückkopplungsregelkreis 11 mit Vorwärtssteuerung 12, wobei Eingangsdaten bzw. Referenzwerte für die Vorwärtssteuerung 12 mit dem Bezugszeichen 14 bezeichnet sind.

Der Rückkopplungsregelkreis 11 bzw. der Regler 13 bildet das Radlenkaktuatorsystem 5 durch ein mathematisches Modell ab und ist durch eine zugeordnete erste Übertragungsfunktion T1 beschrieben. Die Vorwärtssteuerung 12 wird durch eine zweite Übertragungsfunktion T2 beschrieben, welche die Inverse der ersten Übertragungsfunktion T1, d.h. eine Reziprokübertragungsfunktion ist. Das bedeutet, T2 = inv(T1) bzw. T2 = T1$^{-1}$. Mit dem Bezugszeichen 15 ist eine Messeinheit bezeichnet, die dazu eingerichtet ist, entsprechende, durch die Reglereinheit 11 bereitgestellte Ausgangswerte bzw. Lenkparameter zu messen oder erfassen.

Bei dem mathematischen Modell handelt es sich im gezeigten Beispiel um ein Modell zweiter Ordnung. Ferner basiert die Vorwärtssteuerung 11 auf der durch einen Tiefpassfilter F erweiterten Reziprokübertragungsfunktion TE = F x T2 = F x T1$^{-1}$ Der Filter F ist eingerichtet zur Korrektur von Null-Pol-Divergenzen der Reziprokübertragungsfunktion T2 = T1$^{-1}$.

Ist die erste Übertragungsfunktion beispielsweise gegeben durch:

$$T1 = \frac{1}{0.00005s^2 + 0.004s + 1},$$

so ist die zweite Übertragungsfunktion T2, bzw. Reziprokübertragungsfunktion T2 = T1$^{-1}$ gegeben durch:

$$T2 = T1^{-1} = 0.00005s^2 + 0.004s + 1.$$

Bei Verwendung eines Filters F der Form:

$$F = (0.0000015s^2 + 0.0012s + 1)^{-1},$$

ergibt sich die erweiterte Reziprokübertragungsfunktion TE zu:

$$TE = F \times T2 = \frac{0.00005s^2 + 0.004s + 1}{0.0000015s^2 + 0.0012s + 1}.$$

Es versteht sich, dass die genannten Übertragungsfunktionen (T1, T2) und Filter (F) nur beispielhaft zu verstehen sind. Für die Zwecke der erfindungsgemäßen Lösung eignen sich auch andere Übertragungsfunktionen und Filter.

Eine Verwendung einer entsprechenden Reglereinheit 4 ermöglicht eine besonders effiziente und präzise Regelung des Radlenkaktuatorsystems, insbesondere mit stabiler Verstärkung (Gain) und guten Phaseneigenschaften (Phase Characteristics).

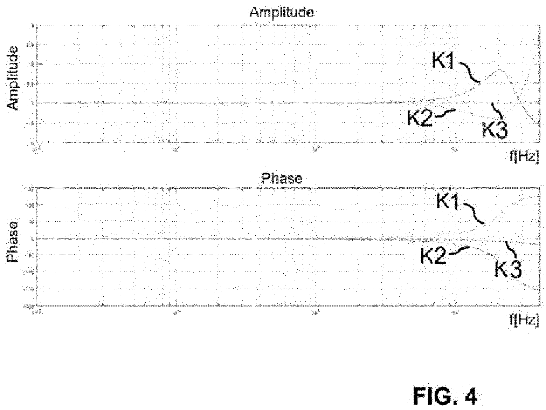

FIG. 4 zeigt diesbezüglich beispielhafte Bodediagramme für eine erfindungsgemäße Radlenkaktuator-Reglereinheit. Das obere Diagramm der FIG. 4 entspricht einem Bodediagramm, bei welchem die Amplitude bzw. Magnitude (z.B. rad/rad) der Übertragungsfunktion bezogen auf die Frequenz (f in Hz) aufgetragen ist. Das untere Diagramm der FIG. 4 entspricht einem Bodediagramm, bei welchem die Phase der Übertragungsfunktion bezogen auf die Frequenz (f/Hz) aufgetragen ist.

In den Diagrammen entsprechen die Kurven K1, K2 und K3 jeweils dem über der Frequenz (f[Hz]) aufgetragenen Verlauf der Amplitude bzw. der Phase des (i) zugehörigen RWA-Modells (Kurve K1), (ii) der Vorwärtssteuerung (Kurve K2) und (iii) des RWA-Modells mit Vorwärtssteuerung (Kurve K3).

Wie aus den Diagrammen ersichtlich ist, geben sich in dem Bereich oberhalb von 3 Hz vorteilhafte Reglereigenschaften hinsichtlich Amplitude, mithin hinsichtlich Verstärkung, und Phase, mithin hinsichtlich Schnelligkeit, was insbesondere aus dem etwa konstanten Verlauf der Kurve K3 im dargestellten Frequenzbereich von etwa 0 bis 30 Hz ersichtlich ist. Insbesondere können im Frequenzbereich von bis zu 5 bis 8 Hz vorteilhafte Regeleigenschaften erreicht werden. Der Bereich von bis zu 5 bis 8 Hz ist insoweit von besonderer Relevanz, da dieser einem Frequenzbereich entspricht, in welchem ein Fahrer aktive Lenkbewegungen tatsächlich ausführen kann bzw. i.d.R. ausführt. Die erfindungsgemäße Verbesserung des dynamischen Verhaltens der Regelung kann mithin direkt in die Bewegungseigenschaften des Fahrzeugs umgesetzt werden.

Damit wird deutlich, dass für die hierin vorgeschlagene Regelung basierend auf einer Inversen der Transferfunktion des zugrundeliegenden RWA Modells, bei welcher die Inverse der Transferfunktion vorzugsweise um einen Filter zur Korrektur von Null-Pol-Divergenzen erweitert ist, vorteilhafte Eigenschaften hinsichtlich stabiler Verstärkung (Gain) und Phaseneigenschaften (Phase) liefert.

**Bezugszeichen**

1 Steer-by-Wire-Lenksystem
2 Lenkrad
3 Lenkwelle
4 Radlenkaktuator-Reglereinheit
5 Radlenkaktuatorsystem
6 gelenktes Rad
7 Rückkopplungssteller
8 Elektromotor
9 Getriebe
10 Zahnstange
11 Rückkopplungsregelkreis
12 Vorwärtssteuerung
13 Regler
14 Eingangsdaten, Referenzwert
15 Messeinheit

T1 erste Übertragungsfunktion
T2 zweite Übertragungsfunktion
$T1^{-1}$ Inverse der ersten Übertragungsfunktion
TE erweiterte Reziprokübertragungsfunktion
F Filter
K1 bis K3 Kurven

**Patentansprüche**

1. Radlenkaktuator-Reglereinheit (4) zur Regelung eines Radlenkaktuatorsystems (5) eines Steer-by-Wire-Lenksystems (1) eines Kraftfahrzeugs, wobei die Radlenkaktuator-Reglereinheit (4) einen Rückkopplungsregelkreis (11) umfasst, welcher das Radlenkaktuatorsystem (5) durch ein mathematisches Modell abbildet und durch eine zugeordnete erste Übertragungsfunktion (T1) beschrieben ist, **dadurch gekennzeichnet, dass** die Radlenkaktuator-Reglereinheit (4) ferner eine Vorwärtssteuerung (12) für den Rückkopplungsregelkreis (11) umfasst, welche durch eine zweite Übertragungsfunktion (T2) beschrieben ist, wobei die zweite Übertragungsfunktion (T2) auf einer durch Invertieren der ersten Übertragungsfunktion (T1) gebildeten Reziprokübertragungsfunktion ($T1^{-1}$) basiert.

2. Radlenkaktuator-Reglereinheit (4) nach Anspruch 1, wobei das mathematische Modell ein Modell zweiter oder höherer Ordnung ist.

3. Radlenkaktuator-Reglereinheit (4) nach einem der vorangehenden Ansprüche, wobei die zweite Übertragungsfunktion (T2) einer durch einen Filter (F) erweiterten Reziprokübertragungsfunktion (TE) der ersten Übertragungsfunktion (T1) entspricht, wobei der Filter (F) eingerichtet ist zur Korrektur von Null-Pol-Divergenzen.

4. Radlenkaktuator-Reglereinheit (4) nach Anspruch 3, wobei es sich bei dem Filter (F) um einen Tiefpassfilter handelt.

5. Verfahren zum Betreiben eines Steer-by-Wire-Lenksystems (1) in einem Kraftfahrzeug, wobei das Steer-by-Wire-Lenksystem ein Radlenkaktuatorsystem (5) aufweist, wobei das Verfahren ein Regeln und/oder Steuern des Radlenkaktuatorsystems (5) basierend auf einem Rückkopplungsregelkreis (11) und einer dem Rückkopplungsregelkreis (11) vorgeschalteten Vorwärtssteuerung (12) umfasst, **dadurch gekennzeichnet, dass**

der Rückkopplungsregelkreis (11) das Radlenkaktuatorsystem (5) durch ein mathematisches Modell abbildet und durch eine zugeordnete erste Übertragungsfunktion (T1) beschrieben wird,
die Vorwärtssteuerung durch eine zweite Übertragungsfunktion (T2) beschrieben wird, und
die zweite Übertragungsfunktion (T2) gebildet wird aus einer durch Invertieren der ersten Übertragungsfunktion (T1) gebildeten Reziprokübertragungsfunktion ($T1^{-1}$).

6. Verfahren nach Anspruch 5, wobei für das mathematische Modell ein Modell zweiter oder höherer Ordnung verwendet wird.

7. Verfahren nach einem der Ansprüche 5 oder 6, wobei die zweite Übertragungsfunktion (T2) gebildet wird durch eine um einen Filter (F) erweiterte Reziprokübertragungsfunktion (TE) der ersten Übertragungsfunktion (T1).

8.  Verfahren nach Anspruch 7, wobei als Filter (F) ein Tiefpassfilter verwendet wird.

9.  Verfahren nach Anspruch 7 oder 8, wobei durch den Filter (F) Null-Pol-Divergenzen der Reziprokübertragungsfunktion $(T1^{-1})$ eliminiert oder zumindest korrigiert werden.

10. Steer-by-Wire-Lenksystem (1) umfassend ein Radlenkaktuatorsystem (5) und ferner

    - eine Radlenkaktuator-Reglereinheit (4) nach einem der Ansprüche 1 bis 4, oder
    - eine Radlenkaktuator-Reglereinheit (4), die derart eingerichtet oder programmiert ist, dass diese im Betrieb ein Verfahren nach einem der Ansprüche 5 bis 9 bewirkt.

11. Kraftfahrzeug umfassend ein Steer-by-Wire-Lenksystem (1), mit einer benutzerseitig bedienbaren Lenkeinheit und mit einem mit zumindest einem gelenkten Rad (6) gekoppelten Radlenkaktuatorsystem (5), das zumindest einen Radlenkaktuator aufweist, und umfassend ferner eine Radlenkaktuator-Reglereinheit (4) nach einem der Ansprüche 1 bis 4, wobei die Radlenkaktuator-Reglereinheit (4) mit dem Radlenkaktuator regelungstechnisch gekoppelt ist zum Zwecke der Regelung des Radlenkaktuators (4) und Umsetzung einer Lenkstellung eines gelenkten Rads (6) basierend auf einem durch die Lenkeinheit erzeugten elektrischen Signal.

**Claims**

1.  Wheel steering actuator control unit (4) for controlling a wheel steering actuator system (5) of a steer-by-wire steering system (1) of a motor vehicle, wherein the wheel steering actuator control unit (4) comprises a feedback control loop (11) which maps the wheel steering actuator system (5) by means of a mathematical model and is described by an associated first transfer function (T1), **characterized in that** the wheel steering actuator control unit (4) further comprises a feedforward control (12) for the feedback control loop (11), which is described by a second transfer function (T2), wherein the second transfer function (T2) is based on a reciprocal transfer function $(T1^{-1})$ formed by inverting the first transfer function (T1).

2.  Wheel steering actuator control unit (4) according to claim 1, wherein the mathematical model is a second-order or higher-order model.

3.  Wheel steering actuator control unit (4) according to one of the preceding claims, wherein the second transfer function (T2) corresponds to a reciprocal transfer function (TE) of the first transfer function (T1) extended by a filter (F), wherein the filter (F) is designed to correct zero-pole divergences.

4.  Wheel steering actuator control unit (4) according to claim 3, wherein the filter (F) is a low-pass filter.

5.  Method for operating a steer-by-wire steering system (1) in a motor vehicle,

    wherein the steer-by-wire steering system has a wheel steering actuator system (5), wherein the method comprises regulating and/or controlling the wheel steering actuator system (5) based on a feedback control loop (11) and a feedforward control (12) connected upstream of the feedback control loop (11), **characterized in that** the feedback control loop (11) maps the wheel steering actuator system (5) by means of a mathematical model and is described by an associated first transfer function (T1), the feedforward control is described by a second transfer function (T2), and the second transfer function (T2) is formed from a reciprocal transfer function $(T1^{-1})$ formed by inverting the first transfer function (T1).

6.  Method according to claim 5, wherein a second-order or higher-order model is used for the mathematical model.

7.  Method according to one of claims 5 or 6, wherein the second transfer function (T2) is formed by a reciprocal transfer function (TE) of the first transfer function (T1) extended by a filter (F).

8.  Method according to claim 7, wherein a low-pass filter is used as the filter (F).

9.  Method according to claim 7 or 8, wherein zero-pole divergences of the reciprocal transfer function $(T1^{-1})$ are eliminated or at least corrected by the filter (F).

10. Steer-by-wire steering system (1) comprising a wheel steering actuator system (5) and further comprising

    - a wheel steering actuator control unit (4) according to one of claims 1 to 4, or
    - a wheel steering actuator control unit (4) which is set up or programmed in such a way that, during operation, it causes a method according to one of claims 5 to 9 to be performed.

11. Motor vehicle comprising a steer-by-wire steering system (1) with a steering unit operable by the user and with a wheel steering actuator system (5) coupled to at least one steered wheel (6), which has at least one wheel steering actuator, and further comprising a wheel steering actuator control unit (4) according to one of claims 1 to 4, wherein the wheel steering actuator control unit (4) is coupled to the wheel steering actuator for control purposes for the purpose of controlling the wheel steering actuator (4) and implementing a steering position of a steered wheel (6) based on an electrical signal generated by the steering unit.

**Revendications**

1. Unité de commande d'actionneur de direction de roue (4) pour commander un système d'actionneur de direction de roue (5) d'un système de direction à commande électrique (1) d'un véhicule automobile, l'unité de commande d'actionneur de direction de roue (4) comprenant une boucle de régulation à rétroaction (11) qui représente le système d'actionneur de direction de roue (5) par un modèle mathématique et est décrite par une première fonction de transfert (T1) associée, **caractérisée en ce que** l'unité de commande d'actionneur de direction de roue (4) comprend en outre une commande directe (12) pour la boucle de régulation à rétroaction (11), qui est décrite par une deuxième fonction de transfert (T2), la deuxième fonction de transfert (T2) étant basée sur une fonction de transfert réciproque ($T1^{-1}$) formée par inversion de la première fonction de transfert (T1).

2. Unité de commande d'actionneur de direction de roue (4) selon la revendication 1, dans laquelle le modèle mathématique est un modèle du deuxième ordre ou d'un ordre supérieur.

3. Unité de commande d'actionneur de direction de roue (4) selon l'une des revendications précédentes, dans laquelle la deuxième fonction de transfert (T2) correspond à une fonction de transfert réciproque (TE) de la première fonction de transfert (T1) étendue par un filtre (F), le filtre (F) étant conçu pour corriger les divergences zéro-pôle.

4. Unité de commande d'actionneur de direction de roue (4) selon la revendication 3, dans laquelle le filtre (F) est un filtre passe-bas.

5. Procédé pour faire fonctionner un système de direction à commande électrique (1) dans un véhicule automobile, le système de direction à commande électrique comportant un système d'actionneur de direction de roue (5), le procédé comprenant la régulation et/ou la commande du système d'actionneur de direction de roue (5) sur la base d'une boucle de régulation à rétroaction (11) et d'une commande directe (12) placée en amont de la boucle de régulation à rétroaction (11), **caractérisé en ce que**

la boucle de régulation à rétroaction (11) représente le système d'actionneur de direction des roues (5) par un modèle mathématique et est décrit par une première fonction de transfert (T1) associée,
la commande directe est décrite par une deuxième fonction de transfert (T2), et
la deuxième fonction de transfert (T2) est formée à partir d'une fonction de transfert réciproque ($T1^{-1}$) formée par inversion de la première fonction de transfert (T1).

6. Procédé selon la revendication 5, dans lequel un modèle de deuxième ordre ou d'ordre supérieur est utilisé pour le modèle mathématique.

7. Procédé selon l'une des revendications 5 ou 6, dans lequel la deuxième fonction de transfert (T2) est formée par une fonction de transfert réciproque (TE) de la première fonction de transfert (T1) étendue par un filtre (F).

8. Procédé selon la revendication 7, dans lequel un filtre passe-bas est utilisé comme filtre (F).

9. Procédé selon la revendication 7 ou 8, dans lequel les divergences zéro-pôle de la fonction de transfert réciproque ($T1^{-1}$) sont éliminées ou au moins corrigées par le filtre (F).

10. Système de direction à commande électrique (1) comprenant un système d'actionneur de direction de roue (5) et comprenant en outre

- une unité de commande d'actionneur de direction de roue (4) selon l'une des revendications 1 à 4, ou
- une unité de commande d'actionneur de direction de roue (4) qui est configurée ou programmée de telle sorte qu'elle effectue, en fonctionnement, un procédé selon l'une des revendications 5 à 9.

11. Véhicule automobile comprenant un système de direction à commande électrique (1), avec une unité de direction pouvant être actionnée par l'utilisateur et avec un système d'actionneur de direction de roue (5) couplé à au moins une roue directrice (6), qui présente au moins un actionneur de direction de roue, et comprenant en outre une unité de commande d'actionneur de direction de roue (4) selon l'une des revendications 1 à 4, l'unité de commande d'actionneur de direction de roue (4) étant couplée à l'actionneur de direction de roue sur le plan technique de régulation afin de réguler l'actionneur de direction de roue (4) et de mettre en œuvre une position de direction d'une roue directrice (6) sur la base d'un signal électrique généré par l'unité de direction.

FIG. 1

FIG. 2

FIG. 3

FIG. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 11167789 B2
- US 11485406 B2
- US 2020283058 A1